# EUROPÄISCHE PATENTSCHRIFT

(11) **EP 0 419 916 B1**
(45) Veröffentlichungstag und Bekanntmachung des Hinweises auf die Patenterteilung: **12.01.1994**
(21) Anmeldenummer: 90117325.2
(22) Anmeldetag: 08.09.1990
(51) Int. Cl.: G01B 11/27, F41G 3/32

(54) **Vorrichtung zum Überprüfen der Parallelität zweier Achsen**
Device to examine the parallelism of two axes
Dispositif pour examiner le parallélisme de deux axes

(30) Priorität: 26.09.1989 DE 3932078
(43) Veröffentlichungstag der Anmeldung: 03.04.1991
(73) Patentinhaber: Krauss-Maffei Aktiengesellschaft, 80997 München (DE)
(72) Erfinder: Francke, Erwin, Ing. (grad.), D-8038 Gröbenzell (DE); Kremmel, Michael, Dipl.-Ing. (FH), D-8067 Kollbach (DE)

(56) Entgegenhaltungen:
- EP-A- 0 036 099

## Beschreibung

Die Erfindung bezieht sich auf eine Vorrichtung gemäß dem Oberbegriff des Patentanspruchs 1. Eine derartige Vorrichtung ist aus der DE-OS 32 05 610 bekannt.

Zum Überprüfen zweier Achsen auf Parallelität, wie dies beispielsweise für die Waffenachse eines Kampfpanzers und die Achsen der Zielfernrohre des Kommandanten und des Richtschützen erforderlich ist, ist es aus der DE-OS 32 05 610 bekannt, eine aus zwei scherenförmig verbundenen Halterungsrohren bestehende Meßvorrichtung zu verwenden, wobei in jedem Halterungsrohr Winkelspiegel und Planspiegel angeordnet sind, deren drei Spiegelebenen senkrecht zueinander orientiert sind. Der Strahlengang verläuft dabei von einem Eintrittsfenster am freien Ende des einen Halterungsrohrs zu einem Austrittsfenster am freien Ende des anderen Halterungsrohrs. Das Eintrittsfenster wird auf die eine Achse eingestellt, in der sich eine Lichtquelle befindet. Das Austrittsfenster wird auf die zweite Achse eingestellt, welche die Achse des Zielfernrohrs ist. Wenn beide Achsen parallel sind, ist die Abbildung des Leuchtflecks der Lichtquelle in Deckung mit der Zielkreuzmarkierung des Zielfernrohrs.

Die Schwierigkeit bei der bekannten Meßvorrichtung liegt zum einen darin, daß mit wachsender Länge der Halterungsrohrs der übertragbare Projektionswinkel des Zielfernrohrs zunehmend kleiner wird, was dazu zwingt, den Durchmesser der Spiegel und damit deren Gewicht und Kosten entsprechend zu vergrößern. Zum anderen ist die Halterung der Spiegel innerhalb der Rohre thermischen oder anderweitig bedingten Veränderungen unterworfen, so daß die richtige gegenseitige Positionierung der Spiegelflächen gesondert überprüfbar sein muß. Hierzu sind bei einer weiteren bekannten Meßvorrichtung nach der DE-OS 38 38 357, die ähnlich wie die vorstehend erläuterte Meßvorrichtung aufgebaut ist und lediglich anstelle von Winkel- und Planspiegeln sogenannte Tripelspiegel enthält, Hilfsprismen und Lochblenden vorgesehen, welche in den Halterungsrohren integriert sind und den zur Parallelüberprüfung der Achsen vorgesehenen Lichtstrahl ausnutzen. Da die Hilfsprismen relativ klein gehalten werden müssen, um den Normalbetrieb der Meßvorrichtung nicht zu stören, ist die dadurch erreichbare Justiergenauigkeit begrenzt. Je länger indessen ein Halterungsrohr und damit je größer der Abstand zwischen den einzelnen Spiegelflächen der Tripelspiegel wird, desto weniger ist die Justiergenauigkeit seitens der kleinen Hilfsprismen ausreichend.

Die Aufgabe der Erfindung besteht demgegenüber darin, eine Vorrichtung der eingangs erwähnten Art zu schaffen, welche auch für größere Abstände zwischen den zu überprüfenden Achsen geeignet ist und mit ausreichender Genauigkeit die Justierung der Spiegelflächen ermöglicht.

Diese Aufgabe wird erfindungsgemäß durch die Merkmale des Patentanspruchs 1 gelöst.

Vorteilhafte Ausgestaltungen und Weiterbildungen der erfindungsgemäßen Vorrichtung ergeben sich aus den abhängigen Ansprüchen.

Die Erfindung wird nachstehend an Hand des in den Zeichnungen veranschaulichten Ausführungsbeispiels näher erläutert. Es zeigt:
- Fig. 1: eine schematische Darstellung der erfindungsgemäßen Meßvorrichtung in der Meßstellung, und
- Fig. 2: eine schematische Darstellung eines Ausschnitts der Meßvorrichtung nach Fig. 1 in der Kalibrierstellung.

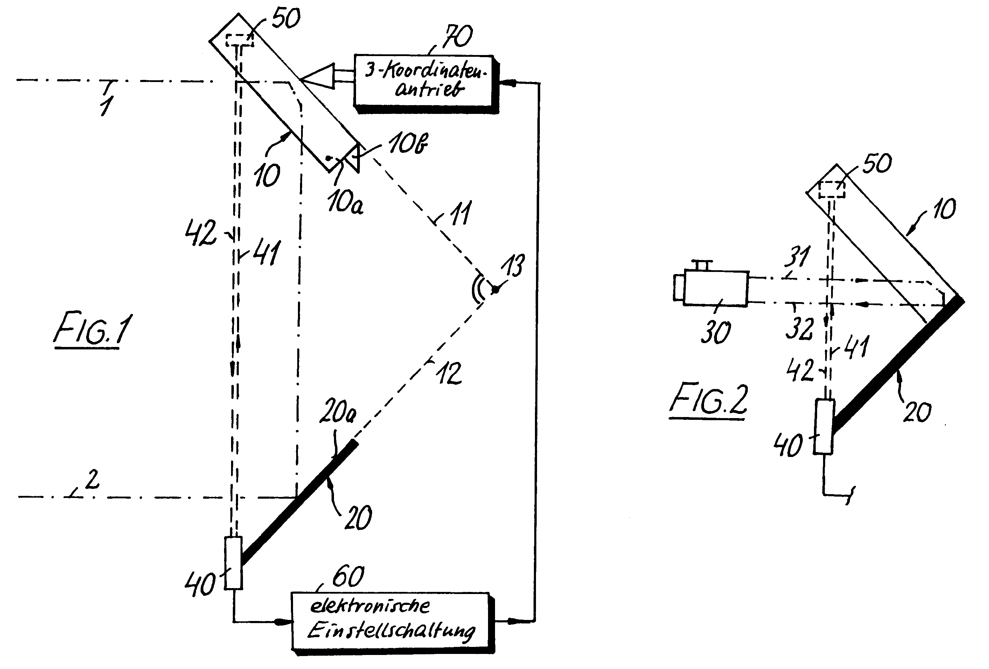

In Fig. 1 sind mit den Bezugszeichen 1 und 2 zwei Achsen bezeichnet, welche parallel zueinander verlaufen. Beispielsweise handelt es sich bei der Achse 1 um die Waffenachse eines Panzerfahrzeugs und bei der Achse 2 um die optische Achse eines Zielfernrohrs. Zur Überprüfung der Parallelität beider Achsen 1, 2 wird die Achse 1 durch eine nicht gezeigte Lichtquelle, z.B. Laserdiode, erzeugt.

Die Meßvorrichtung zur Überprüfung der Parallelität der Achsen 1, 2 besteht aus einem Winkelspiegel 10 und einem Planspiegel 20, welche auf einem nicht gezeigten Gestell montiert sind. Das Gestell läßt sich senkrecht zu den Achsen 1, 2 teleskopartig oder anderweitig verstellen, so daß der Abstand zwischen den Spiegeln 10, 20 senkrecht zu den Achsen 1, 2 stufenlos verstellbar ist. Der Winkelspiegel 10 schneidet dabei die Achse 1, während der Planspiegel 20 die Achse 2 schneidet. Die stufenlose Verstellung des Abstandes zwischen den Spiegeln 10 und 20 erlaubt daher eine Anpassung der Meßvorrichtung an die jeweiligen Abstände der zu messenden Achsen 1, 2. Dabei kann durch geeignete Gestaltung des Gestells für die Spiegel 10, 20 auch ein verhältnismäßig großer Achsenabstand von bis zu 2m und mehr in den Meßbereich der Spiegel 10, 20 einbezogen werden.

Unter der Voraussetzung, daß die Achse 11 des Winkelspiegels 10 senkrecht auf der Spiegelebene 20a des Planspiegels 20 steht und die Spiegelebenen 10a, 10b des Winkelspiegels 10 (Fig. 1 ) einen rechten Winkel bilden, gewährleistet das mit den Spiegeln 10, 20 verwirklichte Tripelspiegelprinzip , daß der auf den Winkelspiegel 10 fallende Strahl der Lichtquelle exakt parallel zur Achse 1 verläuft. Dieser reflektierte Strahl bildet in dem Zielfernrohr mit der optischen Achse 2 einen Leuchtfleck ab. Falls die Achse 1 mit dem reflektierten Strahl zusammenfällt, d.h., exakt parallel zur Achse 1 verläuft, ist der Leuchtfleck deckungsgleich mit der Meßmarkierung (Fadenkreuz) des Zielfernrohrs. Zweckmäßigerweise wird vor die Lichtquelle ebenfalls ein Fadenkreuz angebracht, das in dem Leuchtfleck mitabgebildet wird und mit der Meßmarkierung auf Deckungsgleichheit verglichen werden kann.

Die vorstehend erwähnte Voraussetzung bedeutet, daß die Spiegelflächen 10a, 10b des Winkelspiegels 10 und die Spiegelfläche 20a des Planspiegels 20 jeweils senkrecht zueinander orientiert sind. Für die Spiegelflächen 10a, 10b des Winkelspiegels läßt sich diese Forderung durch entsprechende Herstellungsgenauigkeit verwirklichen. Die Schwierigkeit besteht darin, die Orientierung der Spiegelfläche 20a bezüglich der Spiegelflächen 10a, 10b zu justieren und diese Justage zu überprüfen. Hierzu sind an dem Planspiegel 20 ein Autokollimator 40 und an dem Winkelspiegel 10 ein kleiner Hilfs-Winkelspiegel 50 starr befestigt, und zwar so, daß der ausgesendete Kollimatorstrahl 41 von dem Hilfswinkelspiegel 50 zurück zum Autokollimator 40 als Strahl 42 reflektiert wird. Des weiteren werden in der Kalibrierstellung gemäß Fig. 2 die Spiegel 10 und 20 soweit aufeinander zubewegt, daß die vordere Stirnseite des Winkelspiegels 10 auf der Spiegelfläche 20a des Planspiegels 20 anliegt. In dieser Stellung der Spiegel 10, 20 wird der Strahl 31 eines weiteren Autokollimators 30 (Fig. 2) gegen den Winkelspiegel 10 gerichtet, derart, daß der Strahl 31 nach Umlenkung gegen den Planspiegel 20 von dessen Spiegelfläche 20a zurück zu dem Autokollimator 30 als Strahl 32 reflektiert wird. Die Spiegel 10, 20 werden nun so in der Stellung gemäß Fig. 2 justiert, daß die Strahlen 31, 32 genau parallel zueinander sind, was gleichbedeutend damit ist, daß die Spiegelflächen 10a, 10b und 20a zueinander senkrecht verlaufen. Die Parallelität der Strahlen 31, 32 erkennt man daran, daß die Abbildung der Zielkreuzmarkierung des Autokollimators 30 mit dessen Zielkreuz exakt zur Deckung gelangt. In dieser exakt rechtwinkligen Positionierung der Spiegelflächen 10a, 10b und 20a wird visuell oder elktronisch (wenn anstelle eines Autokollimators 40 eine Anordnung aus Lasersender und CCD-Sensor mit Auswerteelektronik vorgesehen wird) die Ablage des Strahls 42 von dem Strahl 41 des Autokollimators 40 ermittelt, d.h. , die Ablage der Abbildung der Zielkreuzmarkierung des Autokollimators 40 von dessen Zielkreuz. Diese ermittelte Ablage wird festgehalten bzw. gespeichert, um sie in der Meßstellung gemäß Fig. 1 zu verwenden. Werden nämlich in der Meßstellung gemäß Fig. 1 die Spiegel 10, 20 so zueinander positioniert, daß sich in dem Autokollimator 40 (bzw. dessen elktronischem Äquivalent die festgehaltene bzw. gespeicherte Ablage einstellt, so bedeutet dies, daß die Spiegelflächen 10a, 10b und 20a ebenso rechtwinklig zueinander orientiert sind wie dies in der Kalibrierstellung gemäß Fig. 2 der Fall war. In der Ausführungsform mit einem CCD-Sensor und Auswerteelektronik, welch letztere in Fig. 1 als elektronische Einstellschaltung 60 bezeichnet ist, erfolgt die Positionierung des Winkelspiegels 10 mit Hilfe eines Drei-Koordinatenantriebs ,70, welcher von der elektronischen Einstellschaltung solange nachgeführt wird, bis die festgestellte Ablage des Strahls 42 vom Strahl 41 dem gespeicherten Ablagewert aus der Kalibrierung gemäß Fig. 2 entspricht. Auf diese Weise läßt sich auch bei sehr weit voneinander entfernten Spiegeln und 20 deren rechtwinklige Orientierung exakt einstellen und überprüfen. Gerade bei größeren Entfernungen zwischen den Spiegeln 10, 20 - bedingt durch entsprechend große Abstände der zu überprüfenden Achsen 1 und 2 - ist die Verwendung eines Lasersenders mit CCD-Sensor anstelle eines Autokollimators 40 wegen der größeren Strahlbündelung eines Laserstrahls von Vorteil.

Es versteht sich, daß in der Kalibrierstellung gemäß Fig. 2 die vordere Stirnseite des Winkelspiegels 10 nicht unmittelbar an der Spiegelfläche 20a des Planspiegels 20 anzuliegen braucht, sondern daß die beiden Spiegel 10, 20 nur soweit angenähert werden müssen, daß der Strahl 31 des Autokollimators 30 an beiden Spiegeln 10, 20 reflektiert und zurück in den Autokollimator 30 gespiegelt wird.

## Patentansprüche

1. Vorrichtung zum Überprüfen der Parallelität zweier Achsen, insbesondere paralleler Achsen bei Kampffahrzeugen, mit
- einem Winkelspiegel (10), welcher in einer Meßstellung die eine Achse (1) schneidet,
- einem Planspiegel (20), welcher in der Meßstellung die andere Achse (2) schneidet,
wobei der Winkelspiegel (10) und der Planspiegel (20) so zueinander positioniert sind, daß ihre drei Spiegelebenen senkrecht zueinander verlaufen, **dadurch gekennzeichnet,** daß zur Überprüfung der Positionierung der drei Spiegelebenen (10a, 10b, 20a) ein erster Autokollimator (30), ein zweiter, starr mit dem Planspiegel (20) verbundener Autokollimator (40) und ein starr auf dem Winkelspiegel (10) im Strahlengang des zweiten Autokollimators (40) befestigter Hilfs-Winkelspiegel (50) vorgesehen sind, und daß der Abstand des Winkelspiegels (10) und des Planspiegels (20) zwischen der Meßstellung und einer Kalibrierstellung verstellbar ist, in der die Stirnseite des Winkelspiegels (10) dicht an die Spiegelebene (20a) des Planspiegels (20) angrenzt und der Winkelspiegel (10) und der Planspiegel (20) im Strahlengang des ersten Autokollimators (30) liegen, wobei die sich in der Kalibrierstellung ergebende Ablage einer von dem Hilfs-Winkelspiegel (50) reflektierten Zielkreuzabbildung im zweiten Autokollimator (40) bezüglich dessen Zielkreuzmarkierung erfaßbar ist, und wobei in der Meßstellung bei entsprechend weit voneinander positionierten Winkel- und Planspiegeln (10, 20) die beiden Spiegel (10, 20) so zueinander positionierbar sind, daß sich dieselbe Ablage der reflektierten Zielkreuzabbildung einstellt wie in der Kalibrierstellung.

2. Vorrichtung nach Anspruch 1, **dadurch gekennzeichnet**, daß das Okular des zweiten Autokollimators (40) an seinem Randbereich eine Vergrößerungseinrichtung trägt.

3. Vorrichtung nach Anspruch 1 oder 2, **dadurch gekennzeichnet**, daß der Winkelspiegel (10) und der Planspiegel (20) auf einem teleskopartig hinsichtlich des Abstandes zwischen beiden Spiegeln (10, 20) verstellbaren Rahmen gelagert sind.

4. Vorrichtung nach einem der Ansprüche 1 bis 3, **dadurch gekennzeichnet**, daß anstelle des zweiten Autokollimators (40) eine Anordnung, bestehend aus Lasersender und CCD-Sensor mit Auswerteelektronik, vorgesehen ist.

5. Vorrichtung nach Anspruch 4, **dadurch gekennzeichnet**, daß der Winkelspiegel (10) einen Drei-Koordinatenantrieb (70) aufweist, welcher in der Meßstellung von einer elektronischen Einstellschaltung (60) nach Maßgabe der mittels Lasersender und CCD-Sensor als elektrisches Signal erfaßten Ablage der Zielkreuzmarkierung in der Kalibrierstellung steuerbar ist.

## Claims

1. An apparatus for verifying the parallelism of two axes, particularly parallel axes in the case of combat vehicles with
- a corner reflector (10) which intersects one axis (1) at a measuring position,
- a plane mirror (20) which intersects the other axis (2) at the measuring position,
the corner mirror (10) and the plane mirror (20) being so positioned in respect of each other that their three mirror planes extend at right-angles to one another, characterised in that in order to verify the positioning of the three mirror planes (10a, 1b, 20a), a first auto-collimator (30), a second autocollimator (40) rigidly connected to the plane mirror (20) and an auxiliary corner mirror (50) fixed rigidly on the corner mirror (10) in the path of the second autocollimator (40) are provided and in that the distance from the corner mirror (10) and the plane mirror (20) between the measuring position and a calibrating position is adjustable, in which the end face of the corner mirror (10) is closely bordering on the mirror plane (20a) of the plane mirror (20) and the corner mirror (10) and the plane mirror (20) are in the path of the first autocollimator (30) whereby the deviation arising in the calibrating position in respect of a target cross-image reflected in the second autocollimator (40) by the auxiliary corner mirror (50) can be ascertained in respect of the target cross-marking and whereby in the measuring position with correspondingly more remotely positioned corner and plane mirrors (10, 20) the two mirrors (10, 20) can be so positioned in respect of each other that the same deviation of the reflected target cross-image occurs as in the calibrating position.

2. An apparatus according to claim 1, characterised in that the ocular of the second autocollimator (4) has an enlarging device at its marginal zone.

3. An apparatus according to claim 1 or 2, characterised in that the corner mirror (10) and the plane mirror (20) are mounted on a frame which is telescopically adjustable with regard to the distance between the two mirrors (10, 20).

4. An apparatus according to one of claims 1 to 3, characterised in that instead of the second autocollimator (40) an arrangement is provided which consists of laser transmitter and CCD sensor with an electronic evaluating means.

5. An apparatus according to claim 4, characterised in that the corner mirror (10) comprises a three co-ordinate drive (70) which in the measuring position can be controlled by an electronic adjusting circuit (60) according to the deviation in the target cross marking in the calibrating position as ascertained as an electrical signal by the laser transmitter and CCD sensor.

## Revendications

1. Dispositif de vérification du parallélisme de deux axes, et en particulier d'axes parallèles pour des véhicules de combat, avec
- un goniomètre à réflexion (10), qui dans une position de mesure coupe un axe (1),
- un miroir plan (20) qui dans la position de mesure coupe l'autre axe (2)
le goniomètre à réflexion (10) et le miroir plan (20) étant positionnés l'un par rapport à l'autre de telle sorte que leurs trois plans réfléchissants soient perpendiculaires les uns aux autres,
caractérisé en ce que, pour la vérification du positionnement des trois plans réfléchissants (10a, 10b, 20a) sont prévus un premier auto-collimateur (30), un second auto-collimateur (40) relié rigidement au miroir plan (20) et un goniomètre à réflexion auxiliaire (50) fixé rigidement sur le goniomètre à réflexion (10), dans le parcours du rayon du second auto-collimateur (40), et en ce que l'écart entre le goniomètre à réflexion (10) et le miroir plan (20) peut être réglé entre la position de mesure et une position de calibration dans laquelle la face frontale du goniomètre à réflexion (10) est en contact étroit avec le plan réfléchissant (20a) du miroir plan (20), le goniomètre à réflexion (10) et le miroir plan (20) étant situés dans le parcours du premier auto-collimateur (30), l'écartement apparaissant, dans la position de calibration, entre l'image d'une croix de visée réfléchie dans le second auto-collimateur (40) par le goniomètre à réflexion auxiliaire (50) et le marquage d'une croix de visée du second auto-collimateur (40) peut être détecté dans ce dernier, les deux miroirs (10, 20) pouvant, dans la position de mesure, où le goniomètre à réflexion (10) et le miroir plan (20) sont positionnés à plus grande distance l'un de l'autre, être positionnés l'un par rapport à l'autre de telle sorte que s'établisse le même écart de l'image réfléchie de la croix de visée que dans la position de calibration.

2. Dispositif selon la revendication 1, caractérisé en ce que l'oculaire du second auto-collimateur (40) porte dans sa partie périphérique un dispositif d'agrandissement.

3. Dispositif selon la revendication 1 ou 2, caractérisé en ce que le goniomètre à réflexion (10) et le miroir plan (20) sont maintenus sur un cadre dans lequel l'écart entre les deux miroirs (10, 20) peut être réglé télescopiquement.

4. Dispositif selon l'une des revendications 1 à 3, caractérisé en ce qu'au lieu du second auto-collimateur (40) est prévu un dispositif constitué d'un émetteur laser et d'un détecteur CCD avec électronique d'évaluation.

5. Dispositif selon la revendication 4, caractérisé en ce que le goniomètre à réflexion (10) présente un entraînement (70) à trois coordonnées qui dans la position de mesure peut être piloté par un circuit électronique de réglage (60), en fonction de l'écartement du marquage de la croix de visée en position de calibration, marquage détecté sous la forme d'un signal électrique au moyen de l'émetteur laser et du détecteur CCD.
